# FASCICULE DE BREVET EUROPEEN

(11) **EP 2 575 490 B1**
(45) Date de publication et mention de la délivrance du brevet: **19.07.2017**
(21) Numéro de dépôt: 11720767.0
(22) Date de dépôt: 20.05.2011
(51) Int. Cl.: A23F 5/12

(54) **DOSE SPHÉRIQUE DE CAFÉ MOULU COMPACTÉ ET SON PROCÉDÉ DE FABRICATION**
KUGELFÖRMIGER TEIL AUS GEPRESSTEM KAFFEEPULVER UND HERSTELLUNGSVERFAHREN
SPHERICAL PORTION OF COMPACTED GROUND COFFEE AND METHOD FOR MAKING SAME

(30) Priorité: 28.05.2010 FR 1054171
(43) Date de publication de la demande: 10.04.2013
(73) Titulaire: Compagnie Méditerranéenne des Cafés, 06510 Carros (FR)
(72) Inventeur: BLANC, Jean-Pierre, F-06000 Nice (FR)
(74) Mandataire: Decobert, Jean-Pascal
(86) Numéro de dépôt international: PCT/EP2011/058237
(87) Numéro de publication internationale: WO 2011/147746

(56) Documents cités:
- EP-A1- 0 813 816
- WO-A1-2010/006979
- FR-A1- 2 879 175
- US-A1- 2010 260 915

## Description

La présente invention concerne une dose sphérique de café moulu compacté et son procédé de fabrication.

L'invention trouvera son application pour la préparation de boisson à infuser dans tous types de dispositifs de préparation de boissons, plus préférentiellement ceux destinés à la préparation d'expressos.

On connaît dans le domaine des matières à infuser telles que du café, du thé ou du chocolat en poudre préemballé, des dosettes à base de papier filtre. La matière à infuser est sous forme de poudre c'est-à-dire en vrac et doit être maintenue en forme par le papier filtre. Ce type de dosette est ensuite suremballée par une protection, le plus souvent en matière plastique, pour préserver la matière à infuser de l'eau, de l'air et de la lumière. Ces dosettes présentent l'inconvénient d'augmenter la quantité de déchets produits.

Une proposition connue pour remédier aux problèmes des déchets issus de dosettes suremballées consiste à ajouter à la matière à infuser un structurant lui permettant d'être mis en forme sans nécessiter de papier filtre.

De telles dosettes sont décrites dans les documents suivants : WO-A1-2010/006979 divulguant un procédé de fabrication d'une dosette et sa dosette associée qui comprend un coeur comportant du café moulu recouvert sur au moins une partie d'un composant structurant par exemple de l'agar-agar ; FR-A1-2.879.175 divulguant une dosette munie de préférence d'une enveloppe réalisée par l'enrobage d'un coeur formé d'un agrégat de café compact, à l'aide d'une composition alimentaire à base de sucre, café ou lait. L'enrobage permet la cohésion de la dosette.

Cependant, les structurants utilisés à ce jour ne sont pas neutres et les qualités gustatives de la boisson préparée à partir de ce type de dose sont assez médiocres.

Il existe donc le besoin de proposer une dose de matière à infuser qui diminue le nombre d'emballages nécessaires tout en offrant de bonnes qualités gustatives au consommateur.

A cet effet, la présente invention concerne une dose de matière à infuser présentant une enveloppe et un coeur. Le demandeur s'est aperçu qu'en compactant du café moulu de sorte à former une enveloppe compacte de café moulu entourant un coeur de café moulu, il obtenait une dose présentant une cohésion satisfaisante et des propriétés gustatives similaire à celles d'un café moulu en vrac.

En outre, il est particulièrement avantageux que l'enveloppe présente une forme sphérique. En effet, la compression du café moulu sous une forme sphérique pour former l'enveloppe empêche la présence de points de concentration de contraintes se traduisant par des zones de fragilité diminuant les propriétés de cohésion et de résistance de la dose.

Selon un mode de réalisation, la dose selon l'invention comprenant une enveloppe avec une bonne cohésion comprend également des reliefs formés à la surface de l'enveloppe. Les reliefs pénétrant au moins partiellement dans l'enveloppe sont destinés à favoriser la pénétration de l'eau ou d'un autre fluide au travers de celle-ci.

D'autres buts et avantages apparaîtront au cours de la description qui suit d'un mode de réalisation de l'invention illustratif mais non limitatif.

La présente invention concerne une dose de matière à infuser pour la préparation de boisson caractérisée en ce qu'elle comprend une enveloppe sphérique constituée de café moulu compacté et un coeur constitué de café moulu, caractérisée en ce que l'enveloppe est constituée d'au moins une couche distincte du coeur. Selon des variantes préférées mais non limitatives, la dose selon l'invention est telle que :
- la pression de compactage du café moulu de l'enveloppe est supérieure à celle du café moulu du coeur,
- l'enveloppe est composée de 2 à 8 couches concentriques de café moulu présentant une pression de compactage décroissante vers le centre de la dose,
- le café moulu formant l'enveloppe est compacté à une pression de compactage de 5 à 20 fois la pression de compactage du café moulu formant le coeur,
- la dose comprend au moins un canal formé au moins en partie au travers de l'enveloppe et disposé en direction du coeur de la dose de sorte à favoriser l'entrée d'un fluide à l'intérieur de la dose,
- le au moins un canal est disposé selon le rayon de l'enveloppe sphérique en direction du coeur,
- la dose comprend de 8 à 15 canaux présentant une longueur de 2 à 5 millimètres et un diamètre de 0.5 à 2 millimètres,
- le au moins un canal débouche à la surface extérieure de l'enveloppe,
- le au moins un canal est de forme sensiblement conique en s'évasant vers la surface extérieure de l'enveloppe,
- l'enveloppe a une densité comprise entre 0,60 et 1g/cm³,
- le café moulu du coeur est disposé en vrac.

L'invention concerne également un procédé de fabrication caractérisé en ce que le café moulu formant l'enveloppe est compacté sous une pression de 200 à 500 bars, soit 20 à 50 Mégapascal (MPa).

Selon une variante, le procédé est tel que l'enveloppe est formée par compression du café moulu à une température de 35 à 100°C.

L'invention concerne également l'utilisation d'une telle dose pour une préparation de boisson sous percolation haute pression comprise entre 14 et 20 bars, soit 1,4 à 2 MPa.

Les dessins ci-joints sont donnés à titre d'exemples et ne sont pas limitatifs de l'invention. Ils représentent seulement un mode de réalisation de l'invention et permettront de la comprendre aisément.
La figure 1 présente une vue de la dose selon le mode de réalisation d'une dose sphérique.
La figure 2 est une vue en coupe A-A de la figure 1 et la figure 3 en donne une vue de détail.

La présente invention consiste en une dose 1 de matière à infuser pour préparer une boisson.

La matière à infuser est du café moulu. On entend par café moulu des grains de café torréfiés qui sont moulus. La mouture de café utilisée pour la présente invention est de très fine à moyenne. Plus précisément, la mouture est de 0,4 à 2 millimètres, à titre d'exemple 1 millimètre.

La dose 1 selon l'invention comprend du café moulu et préférentiellement elle en est uniquement constituée. Elle ne comprend pas de papier filtre. On peut néanmoins prévoir des additifs notamment pour l'enveloppe 2, de sorte à renforcer la cohésion ou l'étanchéité. L'agar agar peut être un tel additif. Plus préférentiellement, le(s) seul(s) additif(s) est un conservateur.

La dose 1 comprend une enveloppe 2 et un coeur 3. L'enveloppe 2 est formée de café moulu compacté de sorte à entourer le coeur 3 formé de café moulu.

On entend par enveloppe 2 la partie la plus périphérique de la dose 1.

Le café moulu constituant l'enveloppe 2 est compacté de sorte à conférer une tenue à la dose 1 et permettant sa manipulation par l'utilisateur.

L'enveloppe 2 recouvre le coeur 3 formé de café moulu. L'enveloppe 2 est compacte.

Selon un premier mode de réalisation, le café moulu du coeur 3 est compacté à une pression de compactage inférieure à celle appliquée à l'enveloppe 2.

Selon un deuxième mode de réalisation, le café moulu du coeur 3 est non compacté, c'est-à-dire qu'il est en vrac. Ce mode de réalisation présente l'avantage de ne pas modifier sensiblement les propriétés d'infusion du café moulu présent dans le coeur 3 relativement à des conditions classiques.

Selon un troisième mode de réalisation, l'enveloppe 2 comprend au moins deux couches 4 a à d de café dont l'une, la plus interne, est compactée à une pression de compactage inférieure à l'autre, la plus externe. Préférentiellement, les couches 4 a à d de l'enveloppe 2 sont superposées de sorte à ce que la pression de compactage soit décroissante vers le centre de la dose 1. L'enveloppe 2 comprend jusqu'à 8 couches 4.

A titre d'exemple, la couche 4 a, la plus extérieure de l'enveloppe 2, est compactée à une pression de l'ordre de 400 bars, soit 40 MPa. Chaque couche 4 successive possède une pression de compactage décroissante vers le centre de la dose 1 de 25 bars : soit 400 bars, soit 40 MPa pour la couche 4 a - 375 bars, soit 37,5 MPa pour la couche 4b- 350 bars, soit 35 MPa pour la couche 4 c et 325 bars, soit 32,5 MPa pour la couche 4 d vers le coeur 3.

La présence de couches 4 formant l'enveloppe 2 contribue à améliorer l'infusion de la matière à infuser par le fluide pour produire la boisson. En effet, le fluide pénètre progressivement à l'intérieur de la dose 1.

Telle que représentée sur les figures, la dose 1 est de forme sphérique. Notamment, c'est l'enveloppe 2 qui est sphérique. Toutefois, la dose 1 peut prendre d'autres formes dont ovale, en soucoupe, etc.

La forme sphérique est préférée car elle permet à l'enveloppe 2 d'être uniformément compactée. Il n'y a pas de formation de zone de concentration des contraintes qui fragiliserait l'enveloppe 2. La dose 1 ainsi formée ne présente pas d'angle ou de saillie pouvant être endommagé lors du transport, du stockage ou de la manipulation de la dose.

La dose 1 selon l'invention possède de bonnes qualités de résistance à l'effritement : en laissant tomber la dose d'une hauteur de 1,50 mètre sur un sol plan rigide, la quantité de café moulu qui s'est désolidarisée de la dose 1 est comprise entre 2 et 10% du poids de la dose, plus précisément de 2 à 7%.

A titre d'exemple, la dose comprend de 5 à 15 grammes de café moulu, plus précisément de 7 à 10 grammes. La dose 1 a un diamètre de 1,5 à 5 centimètres de diamètre, plus précisément de 2 à 4 centimètres.

L'enveloppe 2 représente de 5 à 40% du volume de la dose 1, préférentiellement de l'ordre de 20%. De cette manière, la qualité gustative de la boisson produite par la dose 1 est très satisfaisante, la majorité du café moulu qui est infusé est un café moulu peu compact qui été protégé de l'air, de l'humidité et de la lumière par l'enveloppe 2.

L'épaisseur de l'enveloppe 2 est comprise entre 3 et 15 millimètres. Les couches 4 a à c ont une épaisseur sensiblement équivalente les unes aux autres. A titre préféré, le coeur 3 constitue la partie la plus interne de la dose 1 qui est d'épaisseur la plus importante de la dose 1. Le coeur 3 comprend avantageusement une zone centrale 7.

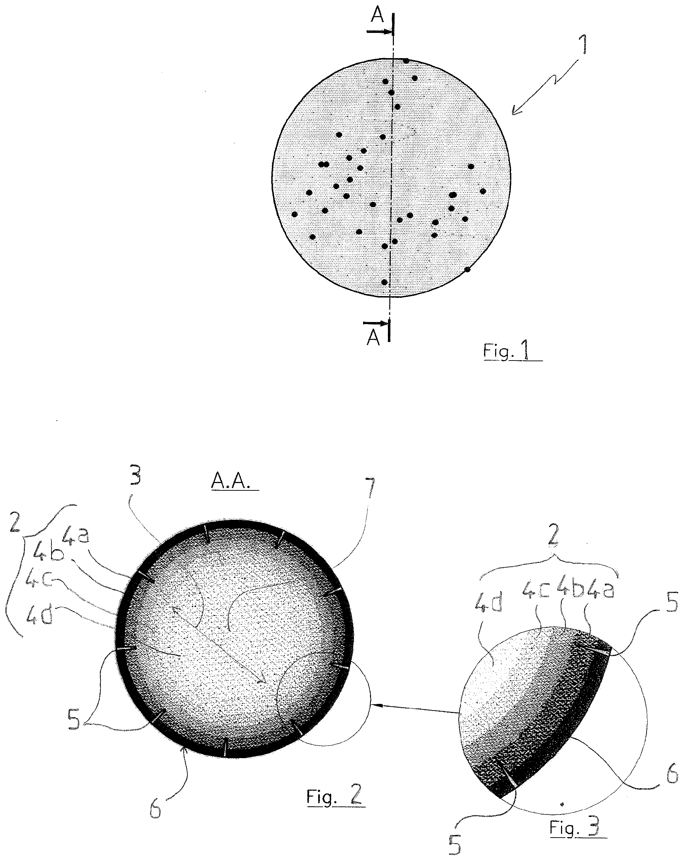

Comme représenté sur les figures 2 et 3, les couches 4 et le coeur 3 de la dose 1 sont concentriques. Cette disposition de la dose 1 avec une enveloppe 2 de café moulu ayant un compactage plus important que le café moulu situé au coeur 3 de la dose 1 permet notamment une utilisation de la dose 1 dans des dispositifs de production de boissons pour expressos. On entend par expresso l'utilisation de la percolation à haute pression. L'eau est projetée sur la dose 1 à une pression allant de 13 à 20 bars, soit 1,3 à 2 MPa, préférentiellement de l'ordre de 16 bars, soit 1,6 MPa.

L'enveloppe 2 présente une densité de 0,60 à 1 gramme par cm³. Ainsi lors de la production de la boisson, c'est l'enveloppe 2 qui est exposée en premier au fluide par exemple de l'eau sous pression.

Selon une première possibilité, l'enveloppe 2 va progressivement être imbibée d'eau jusqu'à ce qu'elle perde sa cohésion et que le coeur 3 soit à son tour exposé au fluide. Lorsque l'enveloppe 2 est constituée de plusieurs couches 4, ce phénomène d'imbibition est progressif. Il est préférable que la zone centrale 7 soit constituée de café moulu en vrac pour que l'infusion de la dose 1 dans son ensemble donne une boisson dont les qualités gustatives soient sensiblement équivalentes à celle d'un café expresso produit avec du café moulu tassé à la main avant percolation.

Selon une autre possibilité, l'enveloppe 2 est imbibée mais conserve sa cohésion. Ceci est possible si l'enveloppe 2 est suffisamment compactée au regard du temps de production de boisson et d'infusion.

Selon une variante de l'invention, la dose 1 comprend un relief formé en partie au moins dans l'enveloppe 2. Ce relief est à titre d'exemple des canaux 5 traversant au moins partiellement l'enveloppe 2 et préférentiellement traversant également au moins en partie le coeur 3. Lorsque l'enveloppe 2 est constituée de plusieurs couches 4, les canaux 5 traversent au moins la couche 4 a la plus externe.

Ce relief est destiné en partie à faciliter l'introduction du fluide dans la dose 1 et notamment à l'amener plus rapidement au niveau du coeur 3 de la dose 1. Le fluide accède au café moulu du coeur 3 sans nécessiter d'imbiber entièrement l'enveloppe 2. Il n'est pas nécessaire que l'enveloppe 2 se délite.

Selon cette possibilité, l'enveloppe 2 reste intacte avant et au moins pendant une partie de la production de la boisson. Préférentiellement, l'enveloppe 2 conserve également sa tenue après la production de la boisson. Ceci est notamment avantageux car la chambre d'infusion du dispositif de production de boissons recevant la dose 1 ne sera pas souillée par du marc de café et ne nécessite pas de rinçage avant la prochaine utilisation.

On notera que cette variante permet d'infuser le café du coeur 3 dans des conditions classiques. Dans le même temps, le contenant du café du coeur 3, c'est-à-dire l'enveloppe 2 est aussi en café si bien qu'aucun constituant pouvant affecter les qualités gustatives ou encore aucun déchet non dégradable n'est nécessaire à la formation de la dose 1.

Selon un mode de réalisation, le relief est formé par des canaux 5 de forme parallélépipédique et préférentiellement conique.

Les canaux 5 sont préférentiellement disposés selon un axe transversal de la dose 1 et plus particulièrement selon un rayon de la dose 1 lorsque celle-ci est sous forme sphérique. Lorsque les canaux 5 sont du type canaux coniques comme présentés sur les figures 2 et 3, ils sont débouchants à la surface extérieure 6 de l'enveloppe 2 et vont en s'évasant vers cette surface extérieure 6 de l'enveloppe 2.

Les canaux 5 sont en nombre variable et sont préférentiellement régulièrement répartis à la surface de la dose 1. A titre préféré, les canaux 5 ont une longueur de 2 à 20 millimètres et/ou une section de 0,5 à 2 millimètres.

A titre d'exemple, une dose de 4 millimètres de section comprend des canaux 5 au nombre de 8 à 15 et/ou de longueur de 2 à 5 millimètres et/ou de section de 0,5 à 2 millimètres.

Ce relief peut être de forme variée.

Selon la possibilité dans laquelle l'enveloppe 2 ne se délite pas pendant la percolation, il est préféré que les reliefs jouent un rôle favorisant l'entrée d'eau à l'intérieur de la dose 1 mais également la sortie de la boisson en dehors, vers l'extérieur, de la dose 1. A cet effet, il est avantageux que le relief, au moins celui disposé sur la zone de la dose 1 destinée à la sortie de la boisson, soit un canal ou trou présentant une section de diamètre inférieur de la mouture de café notamment du coeur 3. De cette manière, l'enveloppe 2 au moyen du relief joue le rôle de filtre.

Selon un autre mode de réalisation, le café moulu de l'enveloppe 2 est compacté de sorte à former des alvéoles et/ou des jours entre les grains de café moulu. Ces alvéoles et/ou jours ont un double rôle de favoriser l'entrée et la sortie de l'eau dans le coeur 3 de la dose 1. En outre, il est préféré que les alvéoles et/ou jours soient de taille inférieure à celle de la mouture du café moulu au moins de celui du coeur 3 de sorte à jour un rôle de filtre.

Pour préparer une dose selon l'invention, autour du coeur 3, l'enveloppe 2 est compactée sous une pression comprise entre 200 et 500 bars, soit 20 à 50 MPa. De manière additionnelle, le compactage de l'enveloppe 2 peut être effectué sous une température allant de 35 à 100°Celsius. De la sorte, le café moulu formant l'enveloppe 2 présente une plus forte cohésion puisque le café moulu a subi un réchauffement amenant une fusion de la mouture de café.

Le procédé sous chauffage est préférentiellement utilisé dans la fabrication d'une dose dans laquelle le café moulu de l'enveloppe 2 n'est pas destiné à être délité et donc présente une faible infusion.

### REFERENCES

- 1.: Dose
- 2.: Enveloppe
- 3.: Coeur
- 4.: Couche
- 4a.: Couche
- 4b.: Couche
- 4c.: Couche
- 4d.: Couche
- 5.: Canaux
- 6.: Surface extérieure de l'enveloppe
- 7.: Zone centrale

## Revendications

1. Dose (1) de matière à infuser pour la préparation de boisson, qui comprend une enveloppe (2) sphérique constituée de café moulu compacté entourant un coeur (3) constitué de café moulu, **caractérisée en ce que** l'enveloppe (2) est constituée d'au moins une couche distincte du coeur (3).

2. Dose (1) selon la revendication 1 dans laquelle la pression de compactage du café moulu de l'enveloppe (2) est supérieure à celle du café moulu du coeur (3).

3. Dose (1) selon l'une quelconque des revendications 1 ou 2 dans laquelle l'enveloppe 2 est composée de 2 à 8 couches concentriques de café moulu présentant une pression de compactage décroissante vers le centre de la dose (1).

4. Dose (1) selon l'une quelconque des revendications précédentes dans laquelle le café moulu formant l'enveloppe (2) est compacté à une pression de compactage de 5 à 20 fois la pression de compactage du café moulu formant le coeur (3).

5. Dose (1) selon l'une quelconque des revendications précédentes comprenant au moins un canal (5) formé au moins en partie au travers de l'enveloppe (2) et disposé en direction du coeur (3) de la dose (1) de sorte à favoriser l'entrée d'un fluide à l'intérieur de la dose (1).

6. Dose (1) selon la revendication précédente dans lequel le au moins un canal (5) est disposé selon le rayon de l'enveloppe (2) sphérique en direction du coeur (3).

7. Dose (1) selon l'une quelconque des revendications 5 ou 6 comprenant de 8 à 15 canaux (5) présentant une longueur de 2 à 5 millimètres et un diamètre de 0.5 à 2 millimètres.

8. Dose (1) selon l'une des revendications 5 à 7 dans laquelle le au moins un canal débouche à la surface extérieure (6) de l'enveloppe (2).

9. Dose (1) selon l'une des revendications 5 à 8 dans laquelle le au moins un canal est de forme sensiblement conique en s'évasant vers la surface extérieure (6) de l'enveloppe (2).

10. Dose (1) selon l'une quelconque des revendications précédentes dans laquelle l'enveloppe a une densité comprise entre 600 et 1000 kg par m³.

11. Dose (1) selon l'une quelconque des revendications précédentes dans laquelle le café moulu du coeur (3) est disposé en vrac.

12. Dose (1) selon l'une quelconque des revendications précédentes dans laquelle le café moulu formant l'enveloppe (2) présente une pression de compactage comprise entre 20 et 50 MPa.

13. Procédé de fabrication d'une dose (1) selon l'une des revendications précédentes **caractérisé en ce que** le café moulu formant l'enveloppe (2) est compacté sous une pression de 20 à 50 MPa.

14. Procédé selon la revendication précédente dans lequel l'enveloppe (2) est formée par compression du café moulu à une température de 35 à 100°C.

## Patentansprüche

1. Dosis (1) aus aufzubrühendem Material für die Getränkezubereitung, umfassend eine kugelförmige Hülle (2), die von verdichtetem Kaffeepulver gebildet wird, das einen Kern (3) umgibt, der von Kaffeepulver gebildet wird, **dadurch gekennzeichnet, dass** die Hülle (2) von mindestens einer Schicht gebildet wird, die sich von dem Kern (3) unterscheidet.

2. Dosis (1) nach Anspruch 1, wobei der Verdichtungsdruck des Kaffeepulvers der Hülle (2) größer ist als jener des Kaffeepulvers des Kerns (3).

3. Dosis (1) nach einem der Ansprüche 1 oder 2, wobei die Hülle (2) aus 2 bis 8 konzentrischen Schichten von Kaffeepulver besteht, die einen zur Mitte der Dosis (1) abnehmenden Verdichtungsdruck aufweisen.

4. Dosis (1) nach einem der vorhergehenden Ansprüche, wobei das Kaffeepulver, das die Hülle (2) bildet, mit einem Verdichtungsdruck verdichtet wird, der 5 bis 20 Mal so groß ist wie der Verdichtungsdruck des Kaffeepulvers, das den Kern (3) bildet.

5. Dosis (1) nach einem der vorhergehenden Ansprüche, umfassend mindestens einen Kanal (5), der mindestens teilweise durch die Hülle (2) ausgebildet und in Richtung des Kerns (3) der Dosis (1) angeordnet ist, um den Eintritt eines Fluids in das Innere der Dosis (1) zu begünstigen.

6. Dosis (1) nach dem vorhergehenden Anspruch, wobei der mindestens eine Kanal (5) gemäß dem Radius der kugelförmigen Hülle (2) in Richtung des Kerns (3) angeordnet ist.

7. Dosis (1) nach einem der Ansprüche 5 oder 6, umfassend 8 bis 15 Kanäle (5), die eine Länge von 2 bis 5 Millimetern und einen Durchmesser von 0,5 bis 2 Millimetern aufweisen.

8. Dosis (1) nach einem der Ansprüche 5 bis 7, wobei der mindestens eine Kanal in die Außenfläche (6) der Hülle (2) mündet.

9. Dosis (1) nach einem der Ansprüche 5 bis 8, wobei der mindestens eine Kanal eine im Wesentlichen konische Form aufweist, die sich zur Außenfläche (6) der Hülle (2) aufweitet.

10. Dosis (1) nach einem der vorhergehenden Ansprüche, wobei die Hülle eine Dichte aufweist, die zwischen 600 und 1000 kg pro m³ beträgt.

11. Dosis (1) nach einem der vorhergehenden Ansprüche, wobei das Kaffeepulver des Kerns (3) lose angeordnet ist.

12. Dosis (1) nach einem der vorhergehenden Ansprüche, wobei das Kaffeepulver, das die Hülle (2) bildet, einen Verdichtungsdruck aufweist, der zwischen 20 und 50 MPa beträgt.

13. Verfahren zur Herstellung einer Dosis (1) nach einem der vorhergehenden Ansprüche, **dadurch gekennzeichnet, dass** das Kaffeepulver, das die Hülle (2) bildet, unter einem Druck von 20 bis 50 MPa verdichtet wird.

14. Verfahren nach dem vorhergehenden Anspruch, wobei die Hülle (2) durch Verdichtung von Kaffeepulver bei einer Temperatur von 35 bis 100°C gebildet wird.

## Claims

1. Dose (1) of material to be infused for the preparation of a drink, comprising a spherical envelope (2) consisting of compacted ground coffee surrounding a core (3) consisting of ground coffee, **characterised in that** the envelope (2) consists of at least one layer distinct from the core (3).

2. Dose (1) according to claim 1, wherein the compacting pressure of the ground coffee of the envelope (2) is greater than that of the ground coffee of the core (3).

3. Dose (1) according to any of claims 1 and 2, wherein the envelope (2) consists of 2 to 8 concentric layers of ground coffee having a compacting pressure that decreases towards the centre of the dose (1).

4. Dose (1) according to any of the previous claims, wherein the ground coffee forming the envelope (2) is compacted at a compacting pressure 5 to 20 times the compacting pressure of the ground coffee forming the core (3).

5. Dose (1) according to any of the previous claims, comprising at least one channel (5) formed at least partially through the envelope (2) and positioned towards the core (3) of the dose (1) in order to promote the entry of a fluid into the dose (1).

6. Dose (1) according to the previous claim, wherein the at least one channel (5) is positioned along the radius of the spherical envelope (2) towards the core (3).

7. Dose (1) according to any of claims 5 and 6, comprising 8 to 15 channels (5) having a length of 2 to 5 millimetres and a diameter of 0.5 to 2 millimetres.

8. Dose (1) according to one of claims 5 to 7, wherein the at least one channel opens onto the outer surface (6) of the envelope (2).

9. Dose (1) according to one of claims 5 to 8, wherein the at least one channel has a substantially conical shape that expands towards the outer surface (6) of the envelope (2).

10. Dose (1) according to any of the previous claims, wherein the envelope has a density of between 600 and 1000kg per m³.

11. Dose (1) according to any of the previous claims, wherein the ground coffee of the core (3) is loose.

12. Dose (1) according to any of the previous claims, wherein the ground coffee forming the envelope (2) has a compacting pressure of between 20 and 50MPa.

13. Method for manufacturing a dose (1) according to one of the previous claims, **characterised in that** the ground coffee forming the envelope (2) is compacted at a pressure of 20 to 50MPa.

14. Method according to the previous claim, wherein the envelope (2) is formed by compression of the ground coffee at a temperature of 35 to 100°C.
